# EUROPÄISCHE PATENTSCHRIFT

(11) **EP 2 198 702 B1**
(45) Veröffentlichungstag und Bekanntmachung des Hinweises auf die Patenterteilung: **28.03.2012**
(21) Anmeldenummer: 09180428.6
(22) Anmeldetag: 22.12.2009
(51) Int. Cl.: A01K 1/06

(54) **Einsperrgitter für Großvieh**
Stanchion for large livestock
Cornadis pour gros bétail

(30) Priorität: 22.12.2008 DE 102008064489
(43) Veröffentlichungstag der Anmeldung: 23.06.2010
(73) Patentinhaber: Braun GmbH, 83620 Feldkirchen/Westerham (DE)
(72) Erfinder: Braun, Hans, 83620, Feldkirchen (DE)
(74) Vertreter: Alber, Norbert

(56) Entgegenhaltungen:
- US-A- 5 226 387

## Beschreibung

### I. Anwendungsgebiet

Die Erfindung betrifft Einsperrgitter für vor Vieh, allem Großvieh, insbesondere in der Bauform als Selbstfanggitter.

### II. Technischer Hintergrund

Derartige Selbstfanggitter besitzen drei Funktionsstellungen, nämlich neben der Offenstellung, in der die Tiere den Kopf jederzeit durch das Gitter stecken als auch wieder zurückziehen können, und der Einsperrstellung, in der der Hals der Tiere so eng umfasst ist, dass sie ihren Kopf nicht mehr aus dem Gitter zurückziehen können, und die vor allem zum Melken der Kühe in dieser fixierten Position dient, eine so genannte Fangstellung oder auch Bereitschaftsstellung:

Deren Zweck besteht darin, dass die Kuh, die ansonsten im Stall und meist auch in der angeschlossenen Weidefläche frei herumlaufen kann, angelockt durch das frisch jenseits des Gitters ausgelegte Futter, den Kopf durch den in der Fangstellung befindliche Halskanal des Einsperrgitters steckt und danach nach unten in Richtung Futtertrog absenkt, und genau durch dieses Absenken das Fangrohr des Einsperrgitters von der Fangstellung in die Einsperrstellung bewegt, und sich selbst einsperrt.

Auf diese Art und Weise sperren sich die Tiere - nachdem das gesamte Einsperrgitter über alle nebeneinander befindlichen Boxenplätze auf Fangstellung gestellt wurde - nacheinander selbst ein, wenn sie zum Fressen kommen, so dass mit dem Melken begonnen werden kann.

Ein solches Einsperrgitter mit Selbstfangfunktion beschreibt beispielsweise die EP 0 620 968. Zwischen horizontalen Tragrohren sind vertikal einerseits Festrohre verschraubt, andererseits Basisrohre verschwenkbar unten befestigt, an denen wiederum Fangrohre verschwenkbar befestigt sind. Dabei können die Fangrohre die drei beschriebenen Stellungen einnehmen, während bei den Basisrohren Fang- und Einsperrstellung identisch ist.

Obwohl derartige Einsperrgitter - und somit auch das Einsperrgitter gemäß der vorliegenden Erfindung - in aller Regel aus Rohren zusammengesetzt sind, können stattdessen auch anders geformte Streben, also mit nicht geschlossenem Querschnitt sondern beispielsweise einem U-förmigem Querschnitt, benutzt werden. Zur Vereinfachung wird für die Zwecke der vorliegenden Anmeldung immer nur von Rohren gesprochen, ohne dass dies eine Einschränkung auf umfänglich geschlossene Querschnitte der Streben bedeuten soll.

Neben den beschriebenen Grundfunktionen müssen derartige Einsperrgitter jedoch weitere Erfordernisse erfüllen:
- Neben der erforderlichen Stabilität ist dies vor allem hohe Sicherheit gegen Verletzung der Tiere, vor allem an vorstehenden Elementen und scharfen Kanten, vor allem auf der vom Trog abgewandten Seite und nahe des Halskanals, indem die Kuh auch in der Einsperrstellung den Hals von unten nach oben bewegen kann.
- Die Verkleinerung vorhandener Freiräume im Einsperrgitter, insbesondere zwischen den einzelnen Einsperrboxen soweit, dass die Kuh möglichst weder den Kopf noch ein Bein durch einen solchen Freiraum stecken kann und wenn doch, sich dann selbst befreien kann und beim eigenen Befreien nicht verletzt.
- Die einfache und kostengünstige Herstellbarkeit und das Verhindern von Verhaken von Halsbändern oder Nasenringen der Tiere in Elementen des Einsperrgitters.
- Die einfache Einstellbarkeit des Einsperrgitters auf unterschiedliche Tierabmessungen.

Daneben besteht jedoch das Problem, dass auch noch einen nachteilige Verhaltensweise der eingesperrten Tiere, in der Regel Kühe, unterbunden werden soll:

Kühe stecken ihren Kopf durch das Einsperrgitter, um das Futter im Futtertrog jenseits des Einsperrgitters zu erreichen.

Sofern es sich dabei um Heu handelt, ist bei Kühen häufig zu beobachten, dass sie ein Büschel Heu aus dem Futtertrog ins Maul nehmen, dann den Kopf hochwerfen, am höchsten Punkt das Maul öffnen und auf diese Art das Heu nach hinten schleudern, wo es z. B. auf ihren eigenen Rücken fällt und von dort auf den Boden

Der Boden ist jedoch in der Regel als Spaltenboden ausgebildet, um die auf den Boden fallenden Exkremente abführen zu können. Das nach hinten geworfene Heu fällt dadurch entweder durch die Spalten direkt in die darunter liegenden Abführkanäle oder wird zumindest von Exkrementen verschmutzt und ist auf jeden Fall nicht mehr nutzbar.

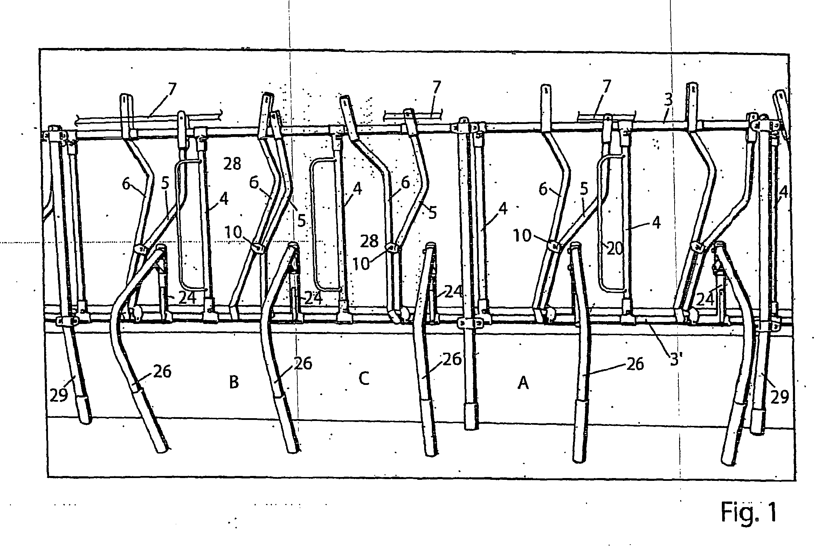

In diesem Zusammenhang ist es aus dem US-Patent 5,226,387 bekannt, dass in der Hauptebene des Einsperrgitters in der Schließstellung (dort Figur 1f) die den Halskanal begrenzenden beiden Rohre parallel zueinander schräg ansteigend verlaufen, die beiden begrenzenden Rohre und damit auch der Halskanal jedoch gerade sind.

Sobald sich ein Tier an diesen leicht schrägen Verlauf des Halskanals einmal gewöhnt hat, ist es für das Tier ein leichtes, durch entsprechende schräg verlaufende Halsbewegung dennoch den Kopf und damit das Futter schnell hochzuwerfen.

### III. Darstellung der Erfindung

### a) Technische Aufgabe

Es ist daher die Aufgabe gemäß der Erfindung, ein bekanntes Einsperrgitter in seinen Nebenfunktionen weiter zu verbessern, ohne den Herstellungsaufwand wesentlich zu erhöhen.

### b) Lösung der Aufgabe

Diese Aufgabe wird durch die Merkmale des Anspruches 1 gelöst. Vorteilhafte Ausführungsformen ergeben sich aus den Unteransprüchen.

Indem der Halskanal von unten nach oben keinen geraden Verlauf besitzt, sondern eine gekrümmte Form, ist es der Kuh nicht möglich, den Hals und damit den Kopf sehr schnell von unten nach oben zu bewegen, da sie bei einer schnellen Bewegung eine ausreichend stark gekrümmte Form des Halskanals nicht mit vollziehen kann.

Der gleiche Effekt tritt ein, wenn der Halskanal - in der Aussicht auf die Hauptebene des Einsperrgitters betrachtet - schräg ansteigend, also abweichend von der Vertikalen, verläuft.

Ein langsames Anheben des Halses und damit Kopfes nach oben bereitet dagegen kein Problem, da hierbei der Hals durch die seitlichen Begrenzungspfosten des Halskanals in der entsprechenden Verlaufsform des Halskanals geführt wird.

Auf diese Art und Weise kann die Kuh keine schnelle Schleuderbewegung des Futters nach hinten oben durchführen, wohl aber nach Beenden des Fressens den Hals und den Kopf in den oberen Bereich des Halskanals langsam anheben, da dieser vorzugsweise über die gesamte Länge in etwa immer die gleiche, für den Hals ausreichende, Breite besitzt.

Besonders wirkungsvoll wird die schnelle Anhebbewegung des Kopfes unterbunden, wenn die gekrümmte Form des Halskanals zwei gegenläufige Biegungen aufweist, beispielsweise indem der Halskanal von unten nach oben betrachtet einen hutförmigen Verlauf aufweist mit einer Ausbiegung zu einer Seite hin.

Vorzugsweise verlaufen die seitlichen Begrenzungspfosten dabei etwa parallel zueinander.

Der maximale Seitenversatz des Halskanals in seinem Verlauf sollte dabei mindestens 10%, besser 20%, besser 25% der Breite des Halskanals in der Fangstellung betragen bzw. mindestens 10 cm, besser 20 cm, besser 25 cm.

Dabei können das obere und untere Ende des Halskanals durchaus fluchtend übereinander liegen, da die doppelte gegenläufige Biegung - wie später in den Zeichnungen dargestellt, oder auch je zwei doppelte, gegenläufige Biegungen, was dann eine hutförmige Kontur des Halskanals ergibt - dazwischen reicht, um die schnelle Aufwärtsbewegung des Kopfes der Kuh zu behindern.

Von den aufragenden, den Halskanal begrenzenden Begrenzungspfosten wird häufig der eine ein Festrohr sein, welches zwischen oberem und unterem Tragrohr fest verschraubt ist, während der andere Begrenzungspfosten verschwenkbar in der Hauptebene des Einsperrgitters ist, um die Breite des Halskanals zwischen einer Schließstellung und einer Offen-Stellung zu verändern.

Dabei ist der bewegliche Begrenzungspfosten häufig das Fangrohr, welches ebenfalls beweglich und schwenkbar in der Gitterebene an einem selbst beweglichen, meist am unteren Tragrohr fixierten, Basisrohr schwenkbar gelagert ist, wobei die Basisrohre am oberen Ende alle mit einer in Längsrichtung des Gitters durchgehenden Steuerstange verbunden sind, mit deren Hilfe alle Einstellplätze des Einsperrgitters auf einmal verstellt werden können.

Dabei kann bevorzugt eines der beiden beweglichen Elemente, also Tragrohr oder Basisrohr, als U-Profil mit der offenen Seite zum anderen Element hin ausgebildet sein, so dass bei Annäherung der beiden Elemente aneinander das eine, beispielsweise rohrförmige, Element in die offene Seite des U-Profiles eintauchen kann, wenn auch nur über einen Teilbereich der Länge.

Da auf diese Art und Weise das Hochwerfen des Futters vermieden wird, kann das Einsperrgitter auch vertikal stehend montiert werden und muss nicht - wie bisher häufig zur vermeintlichen Vermeidung des Hochwerfens praktiziert - mit dem oberen Ende in Richtung des Futtertroges schräg gestellt montiert werden, was die Herstellung und Montage des Einsperrgitters und insbesondere dessen Tragsäulen erschwert.

Der Halskanal sollte eine Länge besitzen, die mindestens der doppelten Höhe des Halses des einzusperrenden Tieres beträgt.

Als Maß für den Seitenversatz im Halskanal kann auch angegeben werden, dass der vom unteren zum oberen Bereich des Halskanals, insbesondere vom untersten zum obersten Punkt des Halskanals vorhandene freie Durchgang schmaler sein muss als der Hals des einzusperrenden Tieres, insbesondere schmaler als 35 cm, besser 30 cm, besser 25 cm.

Durch die Anordnung eines Zusatzgewichtes am Fangrohr auf der dem Basisrohr zugewandten Seite, bezogen auf den Lagerungspunkt des Fangrohres und oberhalb des Lagerungspunktes, wird der Schwerpunkt des Fangrohres in Richtung Basisrohr verlagert. Dadurch wird verhindert, dass z.B. bei Reibungserhöhung durch Verschmutzung im Lager zwischen Basisrohr und Fangrohr beim Verstellen des Einsperrgitters, also der Basisrohre, von Offenstellung in Fang-/Einsperrstellung das Fangrohr sich bereits in die Fangstellung mitbewegt, was nicht erwünscht ist.

Eine besonders einfache Form der Schwerpunktverlagerung ist die Anordnung des Zusatzgewichtes im Inneren des Fangrohres im Bereich seiner Kröpfung, was auf besonders einfache Art und Weise durch Anordnen eines massiven Metallstabes im Inneren des Fangrohres im Biegungsbereich noch vor dem Biegen des Fangrohres möglich ist, welches dann dort fixiert wird einfach durch gemeinsames Biegen von Fangrohr und massiver Metallstange im Inneren.

Durch eine U-förmige Gabel am unteren Ende des Fangrohres, deren frei endende Schenkel in jeder Stellung des Fangrohres das untere horizontale Tragrohr seitlich übergreifen, wird verhindert, dass sich Kühe mit ihrem Halsband auf dem freien unteren Ende des Fangrohres einfädeln und nicht mehr selbst befreien können.

Am oberen Ende des Fangrohres ist ebenfalls eine nach oben offene Gabel vorhanden, zwischen deren Schenkeln die Steuerstange verläuft. Da das Verrasten des Fangrohres hinter einer entsprechenden Nase der Steuerstange durch einen Bolzen geschieht, der höhenverschiebbar in zwei in Verlaufsrichtung der oberen Enden des Fangrohres vorhandenen fluchtenden Langlöchern in den beiden Gabelschenkeln verschiebbar ist, kann bei einer tiefen Stellung des Bolzens jeder Schenkel so weit nach oben über die Steuerstange und den Querbolzen hinausstehen, dass sich eine Kuh darin mit ihrem Nasenring verfangen kann.

Um dies zu verhindern, wird auf das obere Ende der Gabel des Fangrohres eine Brücke aufgesetzt, die die beiden freien Enden verbindet, so dass hier kein Auffädeln eines Nasenringes mehr möglich ist.

Gleiches ist bei Bedarf auch auf die nach unten gerichtete untere Gabel des Fangrohres möglich, sofern auch hier die freien Gabelschenkel lang genug sind, dass sie in jeder Funktionsstellung über die Unterseite des unteren Tragrohres vorstehen.

Eine solche Brücke muss natürlich auf der Gabel gesichert sein, beispielsweise mittels einer hindurchgesteckten Sicherungsschraube oder einem Sicherungsbolzen.

Die Herstellung des Einsperrgitters wird vereinfacht, wenn das Gelenk am unteren Ende des Basisrohres gegenüber dem unteren Tragrohr nicht seitlich neben dem Basisrohr angeordnet wird, sondern sich der Gelenkbolzen durch das untere Ende des Basisrohres hindurch erstreckt.

Um den Schwenkpunkt dieses Gelenkes bezüglich des Schwerpunktes des Basisrohres in die richtige Relativlage zu bringen, kann die untere Biegung des Basisrohres zu diesem Zweck etwas stärker ausgeführt werden, also bis zu einem kleineren Innenwinkel, als dies bei neben dem Basisrohr liegender Lagerung erforderlich wäre.

Um das Verletzungsrisiko für die Kuh zu verringern, wird vorzugsweise der U-förmige Lagerbock, mit dessen Hilfe die Lagerung zwischen Basisrohr und Fangrohr realisiert ist, mit seinem verbindenden Schenkel nicht am Basisrohr, sondern an der dem Basisrohr zugewandten Seite des Fangrohres angeschweißt, so dass seine freien Schenkel in Richtung Basisrohr ragen und dieses seitlich übergreifen.

Dadurch befindet sich sowohl der Lagerbolzen mit seinen vorstehenden, meist durch eine Mutter gesicherten, Enden als auch die Kanten des freien Endes des Lagerbockes weiter von dem Halskanal der Kuh entfernt, der durch das Fangrohr einerseits und das Festrohr andererseits seitlich begrenzt wird.

Um in einem Stall trotz gemeinsamer Ansteuerung des gesamten Einsperrgitters mittels der Steuerstange, z.B. in die Offenstellung, dennoch einige Kühe noch einzeln eingesperrt zu lassen, ist vorzugsweise jede Box mit einer Einzeleinsperrung ausgestattet, indem der verbindende Querbolzen zwischen dem oberen gabelförmigen Ende des Basisrohres und der Steuerstange auf einfache Art und Weise lösbar und herausziehbar, im eingesetzten Zustand jedoch formschlüssig darin gesichert ist.

Nach dem Herausziehen wird dieser Querbolzen in eine tiefer, nämlich knapp unter dem oberen Querrohr des Gitters, im Fangrohr vorhandene zweite Querbohrung eingesetzt, die so positioniert ist, dass dadurch dieses einzelne Fangrohr in seiner Einsperrstellung durch Blockierung gehalten wird.

Der Querbolzen wird auf besonders einfache Art und Weise in seiner jeweiligen Position gesichert, indem er selbst wiederum von einem Sicherungsbolzen an einem Ende in Querrichtung durchdrungen wird, und parallel neben der Querbohrung im Basisrohr und/oder im Fangrohr für den Querbolzen außen an dem Basisrohr unterhalb der Einstecköffnung für den Querbolzen eine Hülse angeschweißt ist, in welche der mit dem oberen Teil im Querbolzen liegende und verschiebbare Sicherungsbolzen hineingesteckt werden kann.

Nach unten kann der Sicherungsbolzen nicht aus dem Querbolzen und der Hülse herausfallen, aufgrund wenigstens eines verdickten, beispielsweise durch eine Mutter gebildeten, Endes. Nach Herausziehen aus der Hülse nach oben kann der Querbolzen aus dem Basisrohr und der Steuerstange bzw. aus dem Fangrohr herausgezogen werden.

Ferner ist es bereits bekannt, an dem Festrohr einen meist U-förmigen Sperrbügel zu befestigen, der in Richtung des benachbarten Basisrohres ragt und zu der Hauptebene des Gitters so versetzt ist, dass das Basisrohr z.B. in der Offenstellung als auch in der Fangstellung mit diesem Sperrbügel überlappt.

Durch den Sperrbügel soll die Größe der freien Räume zwischen dem Festrohr und dem benachbarten Basisrohr so verkleinert werden, dass eine Kuh dort den Kopf nicht mehr hindurchstecken kann.

Dennoch geschieht es immer wieder, dass eine Kuh einen Fuß durch einen dieser verbleibenden Freiräume hindurchsteckt, und Schwierigkeiten hat, sich daraus wieder zu befreien. Dies ist vor allem dann der Fall, wenn der Freiraum, in den die Kuh ihren Fuß eingesteckt hat, sich von oben nach unten verjüngt, so dass der durch das Körpergewicht der Kuh sich herabsenkende Fuß immer stärker in den sich verengenden Keilraum gepresst wird, was der Kuh ein selbsttätiges Entfernen kaum mehr ermöglicht.

Um dies zuverlässiger zu verhindern, wird vorgeschlagen, den Sperrbügel nicht nur U-förmig, also mit einem vertikal verlaufenden, verbindenden Schenkel auszuführen, sondern diesen verbindenden Schenkel doppelt gekröpft mit parallel zueinander versetzten, oberen und unteren, Endbereichen auszuführen, wobei der verbindende Mittelbereich etwa parallel zum mittleren Bereich des Basisrohres in dessen Offenstellung oder Einsperr-/Fangstellung verläuft. Zusätzlich kann dann der innerhalb des Sperrbügels verbleibende Freiraum weiter unterteilt werden, beispielsweise von einer vom oberen Bereich des verbindenden Schenkels vertikal nach unten zum unteren Horizontalschenkel des Sperrbügels führenden weiteren Strebe.

Dadurch entstehen zwei Teilräume, von denen der zum Festrohr hin verbleibende Bereich von oben nach unten gleich breit ist und der benachbarte Bereich innerhalb des Sperrbügels sich in seiner Breite von oben nach unten sogar erweitert, wodurch das beschriebene Problem nicht mehr gegeben ist.

Aus dem gleichen Grund, nämlich ein Hindurchstecken eines Beines der Kuh zu verhindern, kann am Fangrohr oberhalb des Gelenkes zum Basisrohr hin ein Schließblech angeordnet werden, welches in Richtung der Hauptebene des Sperrgitters verläuft, jedoch bezüglich der Ebene von Fangrohr und Basisrohr versetzt auf einer Außenseite des Fangrohres angeschweißt ist.

Bei entsprechender Dimensionierung hintergreift ein solches Schließblech in jeder Funktionsstellung von Basisrohr und Fangrohr das Basisrohr und schließt damit die nach unten zum Gelenk hin enger werdende Lücke zwischen Basisrohr und Fangrohr. Dementsprechend besitzt ein solches Schließblech seine größte Breite etwa auf Höhe der Kröpfung des Fangrohres.

### c) Ausführungsbeispiele

Ausführungsformen gemäß der Erfindung sind im Folgenden beispielhaft näher beschrieben. Es zeigen:
- Fig. 1:: Ein Einsperrgitter mit mehreren Stellplätzen gemäß dem Stand der Technik, und
- Fig. 2:: einen einzelnen Einstellplatz mit gekrümmtem Halskanal,
- Fig. 3: den Einstellplatz gemäß Fig. 2 in der Offenstellung und
- Fig. 4:: einen Einstellplatz gemäß dem Stand der Technik mit zusätzlichen Details,
- Fig. 5:: einen einzelnen Einstellplatz gemäß dem Stand der Technik mit schrägem Halskanal,
- Fig. 6: den Einstellplatz gemäß Fig. 5 in der Offenstellung.

In Fig. 1 ist eine Version des Einsperrgitters in unterschiedlichen Funktionsstellungen der Boxen A, B, C nebeneinander dargestellt, die so in der Praxis an ein-und demselben Einsperrgitter kaum auftritt:

Das Einsperrgitter besteht aus einem oberen und unteren Tragrohr 3 bzw. 3', die in regelmäßigen Abständen durch fest dazwischen verschraubte Festrohre 4 miteinander verbunden sind, die zusammen den Rahmen 2 bilden. Die Tragrohre ihrerseits sind mittels Standrohren 29 in der richtigen Höhe über dem Untergrund, also dem Boden des Stalles, gehalten.

Die einzelnen Stellplätze A, B, C sind durch dazwischen montierte Trennbügel 26 gegeneinander abgetrennt, die winkelförmig ausgebildet sind und mit ihrem einen freien Ende nach unten in den Boden führen und mit dem nach vorn ragenden freien Ende an einem nach oben ragenden Stutzen 24 befestigt sind, der vom unteren Querrohr 3' aus nach oben ragt.

Das Wesentliche des Einsperrgitters sind die zwischen je zwei Festrohren vorhandenen Paare von Fangrohr 6 und Basisrohr 5:

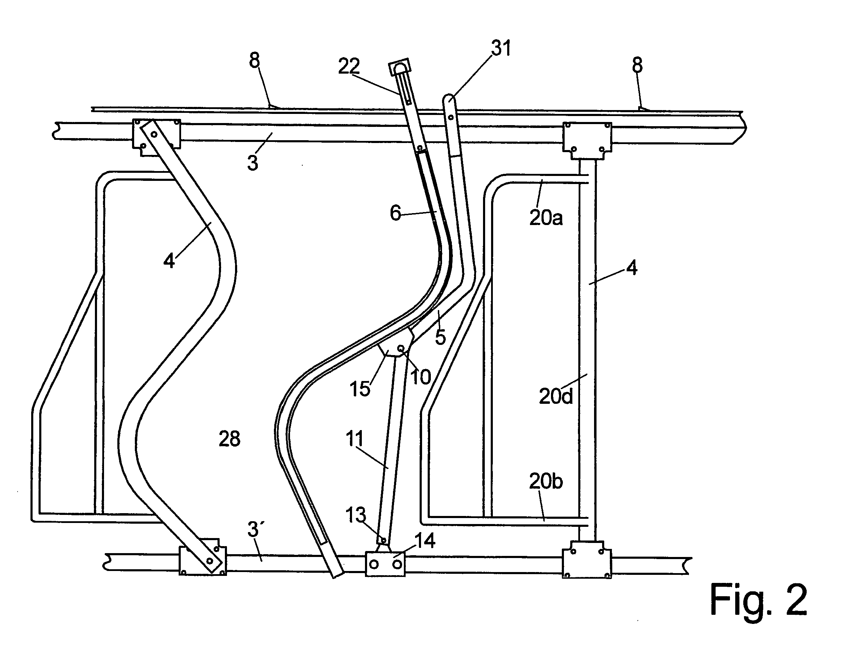

Jedes Basisrohr 5 ist - wie besser in der Einzeldarstellung eines Stellplatzes der Fig. 2ff zu erkennen - mit seinem unteren Ende 11 mittels eines Schwenkgelenkes 13 entlang der Hauptebene des Einsperrgitters verschwenkbar, wobei das Basisrohr 5 ebenso wie das Festrohr **4** sich vom unteren Tragrohr 3' zum oberen Tragrohr 3 und über dieses hinaus erstreckt. Das obere Ende dieser beiden Rohre ist jeweils als nach oben offene U-Gabel 18 ausgeführt, zwischen deren Schenkeln das obere Tragrohr 3 verläuft, entlang welchem somit die oberen Enden dieser Rohre in Querrichtung entlang des Einsperrgitters geführt sind.

Oberhalb des oberen Tragrohres 3 verläuft die Steuerstange 7 über alle Stellplätze hinweg, die jeweils mit dem oberen Ende jedes Basisrohres 5 verbunden ist. Durch Hin- und Herschieben, also in den Fig. 1 und 2 von links nach rechts, können diese Basisrohre 5 mit ihrem oberen Ende verstellt werden, und zwar von einer Offenstellung, wie in Fig. 1 im Stellplatz A dargestellt, in eine Fang-/Einsperrstellung, in der das obere Ende des Basisrohres 5 so weit wie möglich vom Fangrohr 6 wegbewegt wird und sehr nahe an das nächste Festrohr 4 angenähert wird.

Im Bereich der unteren Kröpfung ist am Basisrohr 5 ein Fangrohr 6 ebenfalls schwenkbar in der Hauptebene des Einsperrgitters befestigt, welches ebenfalls an seinen Enden mit einer oberen und unteren U-förmigen Gabel die dortigen Tragrohre 3, 3' übergreift. Dies erfolgt mittels des U-förmigen Lagerbockes 15, dessen Querschenkel am Fangrohr 6 auf der Seite zum Basisrohr 5 hin angeschweißt ist, vorzugsweise jedoch nicht länger sind, als das Basisrohr 5 dick ist. Die Endschenkel des Lagerbockes 15 greifen vorne und hinten über das Basisrohr 5, so dass der Lagerbolzen 16 durch die beiden Endschenkel als auch das Basisrohr 5 gesteckt werden kann und das Schwenkgelenk 10 bildet.

Da das Fangrohr 6 und ebenso das Basisrohr 5 doppelt gegenläufig gekröpft sind mit jeweils einem stumpfem Innenwinkel, verlaufen in Figur 2 der obere und untere Bereich des Basisrohres 5 annähernd vertikal und die oberen Bereiche fast parallel zueinander, während der mittlere Bereich schräg nach oben ansteigend zum nächsten, vom Fangrohr 6 abgewandten, Festrohr 4 verläuft.

Das Fangrohr 6 besitzt im oberen Bereich, etwa im oberen Drittel, eine Kröpfung, deren konvexe, äußere Wölbung zum Basisrohr 5 hin gerichtet ist. Die Offenstellung und Kröpfung des Basisrohres 5 ist dabei so gewählt, dass in dieser Stellung im Bereich oberhalb des Schwenkgelenkes 10 das Fangrohr 6 an dem schräg nach oben ansteigenden entsprechenden Teil des Basisrohres 5 anliegt, was dadurch erreicht wird, dass in dieser Stellung der Schwerpunkt des Fangrohres 6 sich bezüglich des Gelenkes 10 auf der dem Basisrohr 5 zugewandten Seite befindet.

Wie Fig. 1 zeigt, können die Basisrohre 5 von der im Stellplatz A dargestellten Offenstellung in eine zweite Stellung, nämlich die in den Boxen B und C dargestellte, übereinstimmende Fang-/Einsperrstellung mittels der Steuerstange 7 verschoben werden, die dadurch mit ihrem oberen Ende in Richtung Fangrohr 6 verschoben werden, so dass der Bereich des Basisrohres 5 oberhalb des Schwenkgelenkes 10 steiler nach oben verläuft.

Da sich das Fangrohr 6 dabei mit seinem Schwerpunkt immer noch dem Basisohr 5 zugeneigt befindet, liegt - siehe Box B - nunmehr das Fangrohr 6 oberhalb des Gelenkes 10 mit seiner Kröpfung fast in der oberen Kröpfung des Basisrohres 5 an, und auch die oberen Enden von Fangrohr 6 und Basisrohr 5 befinden sich nahe beisammen.

Dafür ragt das untere Ende des Fangrohres 6 unterhalb des Gelenkes 10 nunmehr schräg in den Freiraum zwischen unterem Teil des Basisrohres 5 und dem benachbarten Festrohr 4, also in den Halskanal 28, hinein, und zwar bis über dessen Mitte hinweg, wie in dem Stellplatz B zu erkennen.

Wenn nun in diesem Zustand gemäß Box B, in dem sich das Basisrohr 5 in der übereinstimmenden Fang-/Einsperrstellung befindet, und das Fangrohr 6 in der Fangstellung, eine Kuh ihren Kopf durch den Halskanal 28 steckt, der im oberen Bereich hierfür breit genug ist, und anschließend den Kopf nach unten in Richtung Futter absenkt, drückt sie mit dem unteren Teil ihres Halses den Bereich des Fangrohres 6 unterhalb des Gelenkes 10 nach außen Richtung Basisrohr 5, wodurch sich der obere Teil des Fangrohres 6 in Richtung Festrohr 4 bewegt und damit in die Einsperrstellung, wie in Stellplatz C dargestellt, da ab einem gewissen Punkt sich der Schwerpunkt des Fangrohres 6 bezüglich des Schwenkgelenkes 10 dann auf der vom Basisrohr 5 abgewandten Seite befindet.

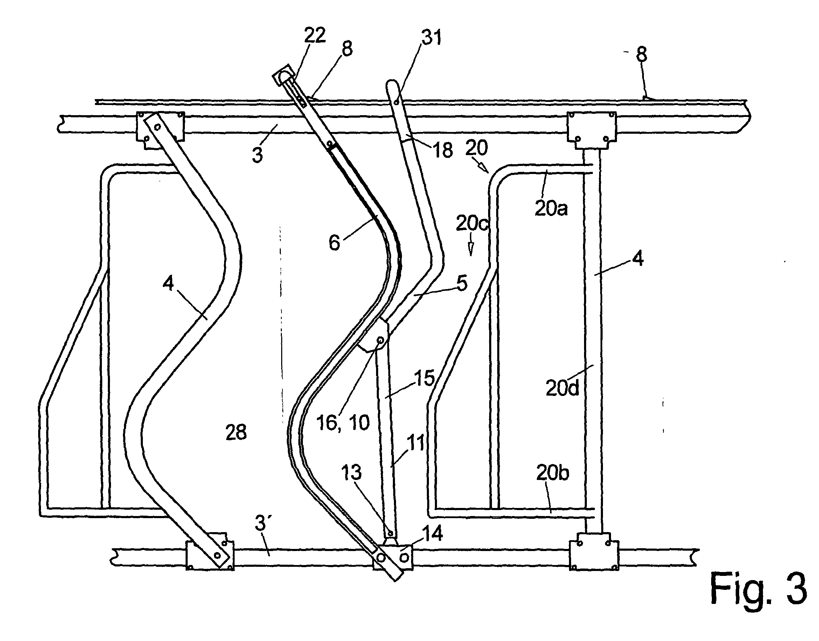

In der Einsperrstellung gemäß Figur 3 verläuft der gesamte Bereich des Fangrohres 6 parallel zum Festrohr 4 und begrenzt damit einen von unten bis oben gleichbleibend breiten Halskanal 28, der breit genug für den Hals der Kuh ist, aber schmaler als deren Kopf, so dass sie diesen nicht mehr aus dem Einsperrgitter zurückziehen kann.

Nach Verlagern des Fangrohres 6 in der Einsperrstellung verriegelt sich dieses selbsttätig in dieser Stellung am oberen Tragrohr 3.

Es sei nochmals betont, dass die erfindungsgemäßen Weiterbildungen, wie sie anhand Figur 2 dargestellt sind, nicht auf die spezielle Version des Einsperrgitters gemäß Figur 1 beschränkt sind.

Erfindungsgemäß ist beabsichtigt, den Halskanal 28 in der Einsperrstellung nicht gerade von unten nach oben durchgehen zu lassen, sondern gemäß der Figuren 2 und 3 einen gekrümmten, vorzugsweise doppelt und in entgegengesetzte Richtungen gekrümmten, Halskanal 28 zu schaffen, betrachtet in der Aufsicht auf die Hauptebene des Einsperrgitters 1.

Zu diesem Zweck sind sowohl das Festrohr 4 als auch das Fangrohr 6 S-förmig gekrümmt und verlaufen in der Einsperrstellung etwa parallel zueinander, so dass sich von oben nach unten ein S-förmig gekrümmter, in der Horizontalen gemessen jedoch immer etwa gleich breiter Halskanal 28 ergibt.

Dadurch kann die Kuh, wenn sie zum Fressen mit dem Kopf im Futtertrog und damit mit dem Hals im untersten Bereich des Halskanals 28 positioniert ist, ihren Hals und damit den Kopf zwar langsam nach oben anheben, wobei der Hals dann entsprechend der S-Kontur des Halskanals 28 seitlich von Festrohr 4 und Fangrohr 6 in Querrichtung nachgeführt wird.

Ein schnelles Hochwerfen des Halses in gerader Richtung nach oben ist der Kuh jedoch verwehrt, da sie dann an die mittlere Krümmung des in der Einsperrstellung befindlichen, in diesem Fall Fangrohres 6, anschlägt.

Die Biegung des Fangrohres 6 ist dabei so gewählt, dass sie unterhalb der Gelenkstelle gegenüber dem Basisrohr 5 eine Krümmung in Richtung Festrohr 4 aufweist und oberhalb dieser Gelenkstelle eine Krümmung von dem Festrohr 4 weg.

Das Festrohr 4 ist analog und parallel zu dem in der Einsperrstellung befindlichen Fangrohr 6 gebogen, jedoch oben und unten an den horizontalen Tragrohren 3, 3' fixiert.

Theoretisch wäre eine andere, z. B. genau gegensätzliche Krümmung des Fangrohres 6 ebenfalls möglich, jedoch würde dies der Grundform des Basisrohres 5 diametral entgegenwirken und damit die Selbstfangfunktion, die das Fangrohr 6 in der Fangstellung ausüben soll, stark erschweren bzw. unmöglich machen.

Natürlich könnte der Halskanal 28 statt den beiden gegenläufigen Krümmungen nur eine Krümmung aufweisen, jedoch würde dies das Hochwerfen des Kopfes bzw. Halses der Kuh weniger stark behindern, vor allem, wenn in einem Teilbereich ein nach wie vor gerader von unten nach oben verlaufender Halskanal 28 verbleibt, der unter Umständen ausreichend hoch, also lang, sein kann, um ein Hochwerfen des Halses - dann über eine kürzere Strecke - immer noch zu ermöglichen.

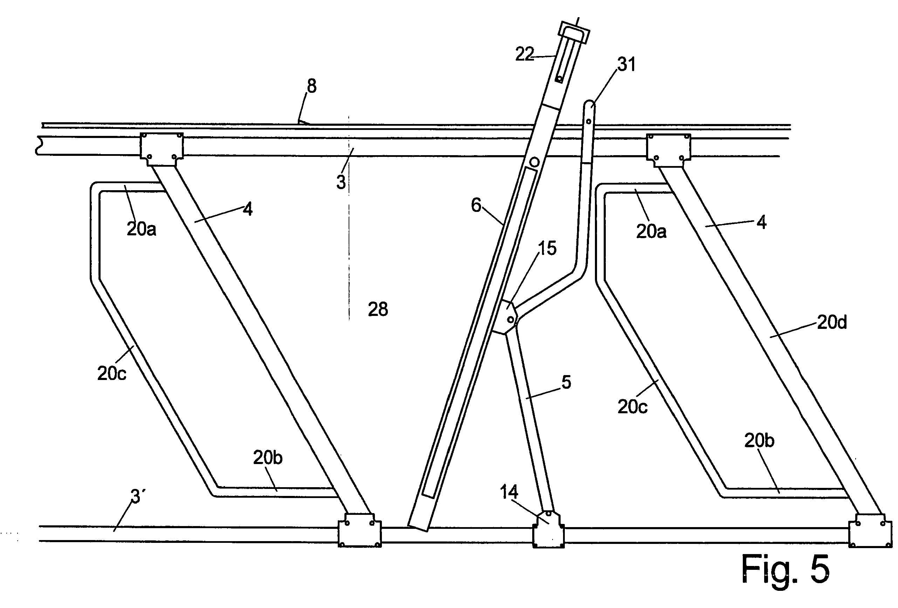

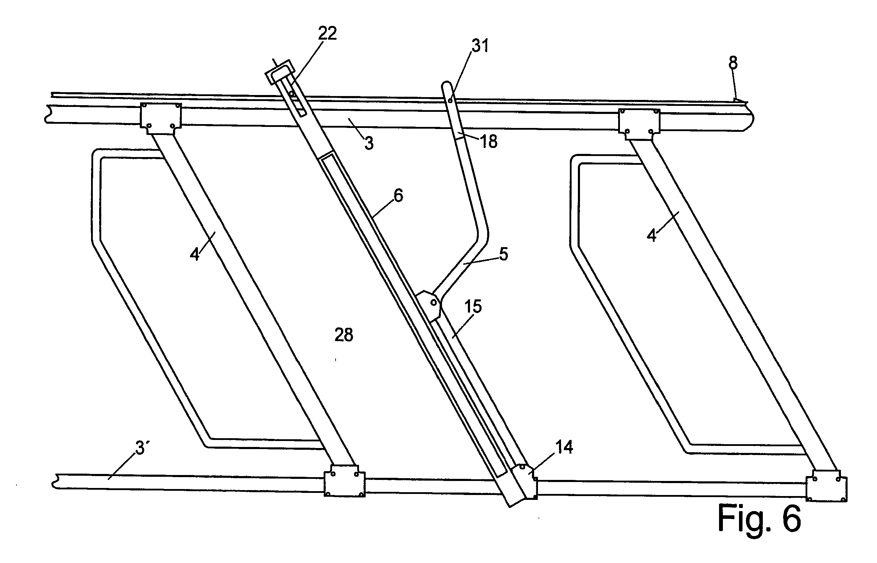

Dagegen zeigen die Figuren 5 und 6 als Alternative einen in seinem Verlauf zwar geraden, aber nicht vertikal sondern schräg zur Vertikalen verlaufenden Halskanal 28.

Dementsprechend sind dabei sowohl das Fangrohr 6 als auch das Festrohr 4 gerade ausgebildet, jedoch ist dann die untere Krümmung des Basisrohres 5 stärker ausgebildet.

Da die Kuh beim Hochschleudern ihres Kopfes den Hals nur vertikal von unten nach oben mit schneller Geschwindigkeit bewegen kann, wird sie hieran durch den schräg verlaufenden Halskanal ebenfalls gehindert, sofern die Schrägstellung ausreichend stark ist.

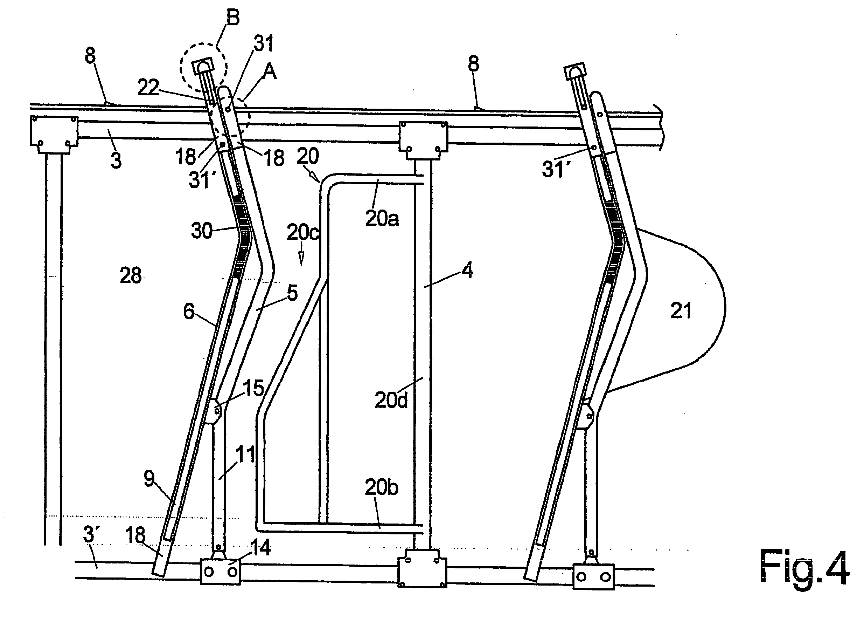

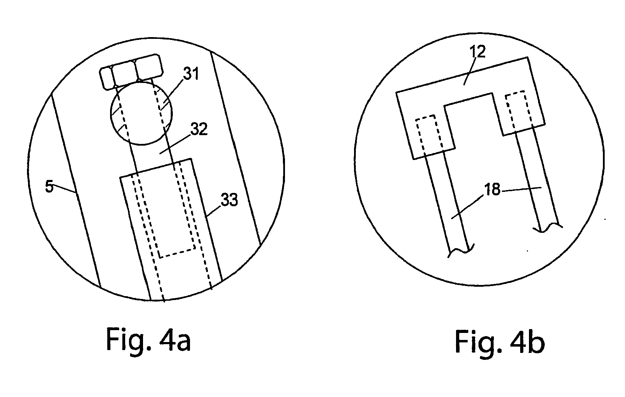

In der Einzeldarstellung der Fig. 4 sind nun weitere mögliche Details der Erfindung an einem Einsperr-Platz gemäß des Standes der Technik dargestellt, die so auch an einem erfindungsgemäßen Einsperrgitter vorhanden sein können:

Zum einen das untere Ende 9 des Fangrohres 6, welches ebenfalls als U-förmige Gabel 18' ausgebildet ist und das untere Tragrohr 3' beidseitig übergreift, um ein Einfädeln eines Halsbandes auf das untere Ende des Tragrohres 6 zu vermeiden.

Auf das freie Ende der Gabel 18 am oberen Ende des Fangrohres 6, aber auch des Basisrohres 5, kann eine Brücke 12 aufgesteckt sein, wie in Fig. 2a, der vergrößerten und um 90 Grad gedrehten Darstellung des Details A in Figur 2 und damit in einer Ansicht in Blickrichtung der Hauptebene des Gitters dargestellt, wodurch die freien Enden der beiden Gabelschenkel miteinander verbunden werden, so dass ein Auffädeln nicht mehr möglich ist. Gleiches könnte bei entsprechender Verlängerung der unteren Gabel 18' auch am unteren Ende erfolgen.

Um das Fangrohr 6 zuverlässig in seiner Fangstellung zu halten, und den Schwerpunkt möglichst weit horizontal in Querrichtung vom Punkt des Schwenkgelenkes 10 zu entfernen, kann im Inneren des Fangrohres 6 ein massiver Metallstab 30 im Bereich der oberen Kröpfung eingebracht und z.B. durch gemeinsames Verbiegen mit dem Fangrohr 6 fixiert sein.

Alternativ oder zusätzlich dazu kann an dem Fangrohr 6 ein Schließblech 21 angeschweißt sein, welches etwa im Bereich der oberen Kröpfung in Richtung Basisrohr 5 und darüber hinaus ragt, indem es parallel zur Hauptebene des Gitters etwas versetzt seitlich am Fangrohr 6 angeschweißt ist. Dies verlagert nicht nur den Schwerpunkt des Fangrohres 6 in die gewünschte Richtung, sondern schließt auch die vor allem in der Offenstellung und Fangstellung vorhandene Lücke zwischen Fangrohr 6 und Basisrohr 5 oberhalb des Schwenkgelenkes 10, und verhindert dort ein Hindurchstecken eines Fußes der Kuh.

In Fig. 4 ist ferner eine spezielle Form des Sperrbügels 20 dargestellt, dessen die Endschenkel 20a, b verbindender, vertikaler Querschenkel 20c nicht gerade verläuft, sondern doppelt gekröpft ist mit jeweils stumpfem Innenwinkel, so dass die oberen und unteren Enden parallel versetzt zueinander etwa vertikal verlaufen, und der Mittelbereich schräg gestellt ist, etwa entsprechend dem mittleren Bereich des benachbarten Basisrohres 5.

Zusätzlich ist zwischen dem oberen Bereich des Schenkels 20c und mit diesem fluchtend und in Verlängerung nach unten bis zum unteren Endschenkel 20b eine verlängernde Strebe 20d eingeschweißt. Durch den mit seinen Endschenkeln 20a, b am Festrohr 4 verschweißten Sperrbügel 20 werden somit Freiräume geschaffen, die zum einen sehr schmal sind und vor allem von oben nach unten entweder gleich breit oder sogar breiter werden und ein Verkeilen des Fußes der Kuh vermeiden.

Auch die Trennbügel 20 sind wie das Schließblech 21 parallel zur Hauptebene des Einsperrgitters versetzt, so dass in der Offenstellung - wie beispielsweise in Fig. 1 für eine konventionelle Form des Sperrbügels 20 sichtbar - vor allem in der Offenstellung in Box A das Basisrohr 5 den Sperrbügel 20 überlappt.

Fig. 4 und das dortige Detail B vergrößert in Fig. 4 zeigt weiterhin im oberen Endbereich eine sehr einfache Einzel-Einsperrung, also Blockierung in der Fangstellung, indem der quer zur Hauptebene des Gitters hindurchgesteckte Querbolzen 31, der zum Verbinden von Steuerstange 7 und dem U-förmigen oberen Ende des Basisrohres 5 quer durch beide hindurchgesteckt wird, zum Entkoppeln wieder herausgezogen und in einer tieferen Position 31' des Fangrohres 6 wieder in eine dortige Querbohrung eingesteckt werden kann.

Diese tiefere Position 31' liegt so hoch - wie am besten in Figur 4 u erkennen - dass der Querbolzen dann unmittelbar unter dem oberen Tragrohr 3 verläuft. Dadurch kann das Fangrohr 6 nicht in die Offenstellung verschwenkt werden, da dann der Querbolzen in der Position 31' eine zunächst nach oben gerichtete, bogenförmige Bewegung vollziehen würde und sich dabei gegenüber der Unterseite des oberen Tragrohres 3 verklemmt.

Um die gekoppelte Stellung mit der Steuerstange 7 zu sichern, ist der Querbolzen 31 an einem Ende wiederum selbst von einem verschiebbaren Sicherungsbolzen 32 durchdrungen, der im Querbolzen 31 verschiebbar ist und an beiden Enden eine Verdickung in Form z.B. einer aufgeschraubten Mutter besitzt, wodurch er im Querbolzen 31 gehalten wird.

Unterhalb der Bohrung für den Querbolzen 31 befindet sich außen am Basisrohr 5 angeschweißt eine Hülse 33, in die im eingesteckten Zustand des Querbolzens 31 der Sicherungsbolzen 32 von oben her eingeführt und abgelegt werden kann.

Zum Entkoppeln ist das Hochziehen des Sicherungsbolzens 32 aus der Hülse 33 und das anschließende Herausziehen des Querbolzens 31 aus der Steuerstange 7 notwendig.

### BEZUGSZEICHENLISTE

- 1: Einsperrgitter
- 2: Rahmen
- 3: oberes Tragrohr
- 3': unteres Tragrohr
- 4: Festrohr
- 5: Basisrohr
- 6: Fangrohr
- 7: Steuerstange
- 8: Nase
- 9: unteres Ende des Fangrohres
- 10: Schwenkgelenk
- 11: unteres Ende des Basisrohres
- 12: Brücke
- 13: Schwenkgelenk
- 14: Rohrstück (Muffe)
- 15: Lagerbock
- 16: Lagerbolzen
- 17: Einzeleinsperrung
- 18, 18': Gabel
- 19:
- 20: Sperrbügel
- 20 a, b: Schenkel
- 20 c: Schenkel
- 20d: Strebe
- 21: Schließblech
- 24: Stutzen
- 26: Trennbügel
- 28: Halskanal
- 30: Metallstab
- 31: Querbolzen
- 32: Sicherungs-Bolzen
- 33: Hülse
- 34: Anschlagteil, Anschlagring

## Patentansprüche

1. Einsperrgitter (1) mit pro Stellplatz
- je zwei von unten nach oben verlaufenden Begrenzungsstreben und einem Halskanal (28) dazwischen, dessen Breite durch Abstandsver-änderung der Begrenzungsstreben veränderbar ist, und
- Mitteln zur Veränderung des Abstandes zwischen den Begrenzungsstreben,
- einer oberen und unteren horizontalen Tragstrebe, welche die Länge, also Höhe, des Halskanals (28) begrenzen, wobei
in der Schließstellung
- die beiden Begrenzungsstreben etwa parallel zueinander verlaufen und
- der Halskanal (28) betrachtet lotrecht zur Hauptebene des Gitters (1) einen zur Vertikalen zumindest abschnittweise schrägstehenden Verlauf aufweist,
**dadurch gekennzeichnet, dass**
- der Halskanal (28) betrachtet lotrecht zur Hauptebene des Gitters (1) eine gekrümmte Form in seiner Verlaufsrichtung aufweist,
- die Krümmung des Halskanals (28) so stark ist, dass der freie gerade Durchgang von unten nach oben schmaler ist als die Breite des Halses des einzusperrenden Tieres.

2. Einsperrgitter nach Anspruch 1,
**dadurch gekennzeichnet, dass**
- der Halskanal (28) zwei gegenläufige Biegungen aufweist und insbesondere
- der Halskanal (28) einen hutförmigen Verlauf aufweist.

3. Einsperrgitter nach einem der vorhergehenden Ansprüche,
**dadurch gekennzeichnet, dass**
- der maximale Seitenversatz des Halskanals (28) in seinem Verlauf mindestens 10%, besser 20%, besser 25% der Breite des Halskanals (28) beträgt, und/oder
- der maximale Seitenversatz des Halskanals (28) in seinem Verlauf mindestens 10 cm, besser mindestens 20 cm, besser mindestens 25 cm beträgt.

4. Einsperrgitter nach einem der vorhergehenden Ansprüche,
**dadurch gekennzeichnet, dass**
das obere und untere Ende des Halskanals (28) fluchtend übereinander liegen.

5. Einsperrgitter nach einem der vorhergehenden Ansprüche,
**dadurch gekennzeichnet, dass**
die bewegliche Begrenzungsstrebe, insbesondere das Begrenzungsrohr, eine Fangstrebe, insbesondere ein Fangrohr (6), eines Einsperrgitters (1) ist, welches an einer ebenfalls beweglichen Basisstrebe, insbesondere einem Basisrohr (5), schwenkbar in der Hauptebene des Halskanals (28) und damit des Einsperrgitters gelagert ist und insbesondere die Basisstrebe, insbesondere das Basisrohr (5), an seinem oberen Ende mittels einer Steuerstange (7) zwischen einer Bereitschaftsstellung und einer Schließstellung verschiebbar ist.

6. Einsperrgitter nach einem der vorhergehenden Ansprüche,
**dadurch gekennzeichnet, dass**
- die feste Begrenzungsstrebe, insbesondere das Begrenzungsrohr, oben und unten mit der horizontalen Tragstrebe, insbesondere Tragrohr (3, 3'), verschraubt ist und/oder
- das Einsperrgitter betrachtet in seiner Verlaufsrichtung senkrecht steht, und/oder
- der Halskanal (28) eine Länge, also Höhe besitzt, die mindestens der doppelten Höhe des Halses des einzusperrenden Tieres beträgt.

7. Einsperrgitter nach einem der vorhergehenden Ansprüche,
**dadurch gekennzeichnet, dass**
- an der Fangstrebe, insbesondere dem Fangrohr (6), ein Zusatzgewicht, insbesondere im Bereich dessen Kröpfung, insbesondere im Inneren des Fangrohres (6), angeordnet ist, insbesondere in Form eines massiven Metallstabes im Inneren des Fangrohres (6) im Bereich dessen Biegung, welches beim Biegen des Fangrohres (6) mitgebogen wird, und/oder
- am unteren Ende der Fangstrebe, insbesondere des Fangrohres (6) eine U-förmige Gabel (18') angeordnet ist, deren freie Schenkel so lang sind, dass sie in jeder Funktionsstellung über die untere Tragstrebe, insbesondere das Tragrohr (3'), greifen.

8. Einsperrgitter nach einem der vorhergehenden Ansprüche,
**dadurch gekennzeichnet, dass**
- auf die freien Enden der U-Gabel (18) des oberen Endes der Fangstrebe, insbesondere des Fangrohres (6), zwischen denen die Steuerstange (7) läuft, eine Brücke (12) aufgesetzt ist, die das Einfädeln der freien Enden der Gabel in z. B. einen Nasenring verhindert und insbesondere
- die Brücke (12) von oben auf die freien Enden der Gabel (18) aufgesteckt und dort gesichert ist.

9. Einsperrgitter (1) nach einem der vorhergehenden Ansprüche,
**dadurch gekennzeichnet, dass**
- das Schwenkgelenk (13) am unteren Ende der Basisstrebe, insbesondere des Basisrohres (5), sich im Querschnittsbereich des Basisrohres (5) befindet und insbesondere in einer Bohrung durch das Basisrohr (5) hindurch und/oder
- das Schwenkgelenk (10) zwischen Basisrohr (5) und Fangrohr (6) einen U-förmigen Lagerbock (15) umfasst, der mit seinem verbindenden Schenkel an der dem Basisrohr (5) zugewandten Seite des Fangrohres (6) angeschweißt ist und mit seinen freien Enden beidseits das Basisrohr (5) übergreift, wo sich ein Lagerbolzen (16) durch Lagerbock und Basisrohr (5) hindurch erstreckt.

10. Einsperrgitter (1) nach einem der vorhergehenden Ansprüche,
**dadurch gekennzeichnet, dass**
- an der Verbindungsstelle zwischen dem oberen Ende des Basisrohres (5) bzw. des Fangrohres (6) und der Steuerstange (7) bzw. der oberen Tragstrebe, insbesondere dem Tragrohr (3), eine Einzeleinsperrung (17) vorgesehen ist, die es erlaubt, einzelne Fangrohre (6) eines gesamten Gitters in der Einsperrstellung zu halten, während die übrigen durch die Steuerstange (7) in die Offenstellung bewegt werden und/oder
- an dem Festrohr (4) ein Sperrbügel (20) befestigt, insbesondere angeschweißt, ist, der parallel versetzt zur Ebene von Basisrohr (5) und Fangrohr (6) in Richtung Fangrohr (6) ragt und in allen Funktionsstellungen des Basisrohres (5) den verbleibenden Freiraum zwischen Basisrohr (5) und Festrohr (4) soweit verkleinert, dass das Hindurchstecken eines Kopfes zuverlässig verhindert wird und sowohl die Freiräume im Sperrbügel (20) als auch zwischen Sperrbügel (20) und Basisrohr (5) eine Form besitzen, die sich von oben nach unten nicht verjüngt, sondern gleich bleibt oder breiter wird.

11. Einsperrgitter (1) nach einem der vorhergehenden Ansprüche,
**dadurch gekennzeichnet, dass**
- der Sperrbügel (20) im wesentlichen U-förmig gestaltet ist, dessen parallel frei endende Schenkel (20a, b) an dem Festrohr (4) verschweißt sind und horizontal verlaufen, während der verbindende dann aufrecht stehende Schenkel (20c) doppelt gekröpft ist mit zwei zueinander parallel versetzten Endbereichen und einem schrägen Mittelbereich, der in seiner Neigung etwa der Neigung des mittleren Bereiches des Basisrohres (5) zwischen der Offenstellung und der Einsperr-/Fangstellung entspricht und/oder
- von dem oberen der beiden Endbereiche dieses aufrecht stehenden Querschenkels (20c) eine zusätzliche Strebe (20d) nach unten zum unteren horizontalen Schenkel des Sperrbügels verläuft und an beiden Enden damit verschweißt ist.

12. Einsperrgitter (1) nach einem der vorhergehenden Ansprüche,
**dadurch gekennzeichnet, dass**
- am Fangrohr (6) abragend in Richtung Basisrohr (5) insbesondere mit dem unteren Ende am Gelenk (10) beginnend ein Schließblech (21), insbesondere auf der dem Trog abgewandten Seite, angeschweißt ist, welches in jeder Funktionsstellung das Basisrohr (5) hintergreift und damit in Richtung quer zur Hauptebene des Gitters den Freiraum zwischen Basisrohr (5) und Fangrohr (6) wenigstens in dem Bereich oberhalb des Gelenkes (10) verschließt und insbesondere
- das Schließblech (21) seine größte Breite im Bereich der Kröpfung des Fangrohres (6) besitzt.

13. Einsperrgitter (1) nach einem der vorhergehenden Ansprüche,
**dadurch gekennzeichnet, dass**
- an dem Rohrstück (14), welches über das untere Tragrohr (3') geschoben als Lagerbock für das untere Gelenk (13) des Basisrohres (5) dient, eine Befestigung, insbesondere ein nach oben aufragender Stutzen (24), für einen Trennbügel (26) zwischen den einzelnen Boxen des Stalles vorhanden ist, der mit dem anderen Ende im Boden des Stalles verankert ist und insbesondere
- das Rohrstück (14) soweit verkürzt ist, dass es in seiner Längsrichtung beabstandet gerade noch zwei separate Gewindebohrungen zum Einbringen von Klemmschrauben (27) gegen das Tragrohr (3') aufweist.

14. Einsperrgitter nach einem der vorhergehenden Ansprüche,
**dadurch gekennzeichnet, dass**
- an dem Einsperrgitter (1) eine Hochwerf-Verhinderung angeordnet ist in Form wenigstens eines Anschlagteiles (34, 35), welches beweglich am Einsperrgitter (1) befestigt ist und sich in der Ausgangsstellung entweder innerhalb des oberen Bereiches des Halskanals (28) befindet oder unmittelbar neben dem Halskanal (28) aus der Hauptebene des Gitters (1) herausragt zur Seite des Futtertroges hin und insbesondere
- das Anschlagteil ein am Festrohr (4) oder oberen Tragrohr (3) befestigtes Anschlagteil ist, welches im Ausgangszustand in den Halskanal (28) zwischen dem vertikalen Festrohr (4) und dem Fangrohr (6) hineinragt, oder
- das Anschlagteil ein Anschlagring (34) ist, der insbesondere zumindest das obere Drittel des Halskanals, besser die obere Hälfte des Halskanals (28), im Wesentlichen abdeckt.

15. Einsperrgitter nach der vorhergehenden Ansprüche,
**dadurch gekennzeichnet, dass**
- das Anschlagteil zwei Anschlagbügel (35) sind, von denen je einer mit seinen beiden freien Enden am Festrohr (4) und der andere am Fangrohr (6) befestigt ist, so dass sie in der Ausgangsstellung aus der Hauptebene des Gitters heraus zu derjenigen Seite ragen, auf der sich der Futtertrog befindet und/oder
- die Anschlagbügel (35) bezüglich des Halskanals (28) nach außen, also auf größeren Abstand zueinander, verschwenkbar sind und die am Festrohr (4) bzw. Fangrohr (6) haltenden Gelenke in die Ausgangsstellung vorgespannt sind.

## Claims

1. A stanchion (1) including the following per stall:
- two delineation struts extending from a bottom up with a neck channel (28) there between, whose width is variable through varying a distance of the delineation struts;
- devices for changing a distance between the delineation struts;
- an upper support strut and a lower horizontal support strut which define a length, thus a height of the neck channel (28),
- wherein in closed position the two delineation struts extend approximately parallel to one another,
- wherein the neck channel (28) viewed orthogonal to the main plane of the stanchion (1) is arranged at least in sections at a slant angle,
- wherein the neck channel (28) viewed orthogonal to the main plane of the stanchion (1) has a curved shape in extension direction, and
- wherein the curvature of the neck channel is strong enough so that the free straight pass-through from the bottom up is narrower than the width of the neck of the animal to be locked in.

2. The stanchion according to claim 1,
- wherein the neck channel (28) has two opposite turns and in particular
- wherein the neck channel (28) has a hat shaped contour.

3. The stanchion according to one of the preceding claims,
- wherein a maximum lateral offset of the neck channel (28) over its course is at least 10 %, better 20 %, better 25 % of the width of the neck channel (28), and/or
- wherein the maximum lateral offset of the neck channel (28) over its path is at least 10 cm, better 20 cm, better at least 25 cm.

4. The stanchion according to one of the preceding claims, wherein the upper and the lower ends of the neck channel (28) are aligned with one another and arranged on top of one another.

5. The stanchion according to one of the preceding claims, wherein the movable delineation strut, in particular the delineation tube is a catch strut, in particular a catch tube (6) of a stanchion (1) which is supported at a base strut which is also movable, in particular a base tube (5), so that it is pivotable in the main plane of the neck channel (28) and thus of the stanchion and in particular the base strut, in particular the base tube (5) is movable at its upper end through a control rod (7) between a ready position and a closed position.

6. The stanchion according to one of the preceding claims,
- wherein the fixed delineation strut, in particular the delineation tube is bolted together at the top and at the bottom with the horizontal support strut, in particular the support tube (3, 3'), and/or
- the stanchion extends vertically, and/or
- the neck channel (28) has a length, thus height which corresponds at least to twice the height of the neck of the animal to be locked in.

7. The stanchion according to one of the preceding claims,
- wherein a ballast weight is arranged at the catch strut, in particular the catch tube (6), in particular in a portion of an elbow of the catch strut, in particular in an interior of the catch tube, in particular configured as a solid metal rod in the interior of the catch tube (6) in the portion of its elbow, wherein the ballast weight is bent with the catch tube (6) when the catch tube (6) is bent and/or
- wherein a U-shaped fork (18') is arranged at a lower end of the catch strut, in particular of the catch strut (6), wherein free arms of the fork are long enough so that they reach in each functional position over the lower support strut, in particular the support tube (3').

8. The stanchion according to one of the preceding claims,
- wherein a bridge (12) is placed onto the free ends of the U-fork (18) of the upper end of the catch strut, in particular the catch tube (6), wherein the control rod (7) extends between the free ends, wherein the bridge prevents inserting the free ends of the fork e.g. into a nose ring and in particular
- wherein the bridge (12) is inserted onto the free ends of the fork (18) and secured thereon.

9. The stanchion according to one of the preceding claims,
- wherein the pivot link (13) is arranged at a lower end of the base strut, in particular the base tube (5) and in particular arranged in the cross-sectional portion of the base tube (5) and in particular extends in a borehole through the base tube (5) and/or
- wherein the pivot link (10) between the base tube (5) and the catch tube (6) includes a U-shaped support (15) which is welded with its connecting arm at a side of the catch tube (6) oriented towards the base tube (5) and reaches with its free ends on both sides over the base tube (5) where a support bolt (16) extends through the support and the base tube (5).

10. The stanchion according to one of the preceding claims,
- wherein a single locking device (17) is provided at the joint between the upper end of the base tube (5) or of the catch tube (6) and the control rod (7) or the upper support strut, in particular the support tube (3), wherein the single locking device facilitates retaining particular catch tubes (6) of an entire stanchion in the locking position, while the other catch tubes are moved into an open position through the control rod (7) and/or
- wherein a locking bar (20) is arranged at the stationary tube (4), in particular welded thereto, wherein the locking bar protrudes towards the catch tube (6) and is offset parallel to the plane of the base tube (5) and the catch tube (6) and reduces the free space between the base tube (5) and the stationary tube (4) in all functional positions of the base tube (5), so that passing a head through is reliably prevented and the free spaces in the locking bar (20) and also between the locking bar (20) and the base tube (5) have a shape which does not taper top down but remains constant or becomes wider.

11. The stanchion according to one of the preceding claims,
- wherein the locking bar (20) is substantially configured U-shaped, its parallel freely terminating arms (20a, b) are welded to the stationary tube (4) and extend horizontally, while the remaining vertically standing arm (20c) has two elbows with two end portion offset parallel to one another and a slanted center portion, whose inclination approximately corresponds to an inclination of the center portion of the base tube (5) between the open position and the locking- / catch-position and/or
- wherein an additional strut (20d) extends from the upper end portion of the two end portions of the horizontally oriented transversal arm (20c) in downward direction to the lower horizontal arm of the locking bar and is welded thereto with both ends.

12. The stanchion according to one of the preceding claims,
- wherein a closing plate (21) is welded to the catch tube (6) protruding in a direction towards the base tube (5) in particular starting with a lower end at the pivot link (10), in particular on a side oriented away from a trough, wherein the closing plate reaches behind the base tube (5) in each functional position and thus closes the free space between the base tube (5) and the catch tube (6) in a direction transversal to the main plane of the stanchion at least in the portion above the pivot link (10) and in particular
- wherein the closing plate (21) has its greatest width in a portion of an elbow of the catch tube (6).

13. The stanchion according to one of the preceding claims,
- wherein an attachment in particular an upward protruding spout (24) is provided at the tubular component (14) which is slid over the lower support tube (3') as a support for the lower link (13) of the base tube (5), wherein the attachment is provided for a divider bar (26) between particular stalls of the stable, wherein the divider bar is anchored with another end in the ground of the stable and in particular,
- wherein the tubular component (14) is shortened so that it includes just two separate threaded boreholes offset in its longitudinal direction for introducing clamping bolts (27) against the support tube (3').

14. The stanchion (1) according to one of the preceding claims, wherein
- a throw up preventer is arranged at the stanchion (1), wherein the throw up preventer is configured as at least one contact component (34, 35) which is movably attached at the stanchion (1) and which is arranged in starting position either within the upper portion of the neck channel (28) or directly adjacent to the neck channel (28) protruding out of the main plane of the stanchion (1) towards a side of the feed trough, and in particular
- wherein the contact component is a contact component that is attached to the stationary tube (4) or the upper support tube (3), wherein the contact component protrudes into the neck channel (28) between the vertical stationary tube (4) and the catch tube (6) in an extended condition,
- wherein the stop component is a stop ring (34) which substantially covers in particular at least the upper third of the neck channel, better the upper half of the neck channel.

15. The stanchion according to one of the preceding claims,
- wherein the stop component includes two stop bars (35), wherein one respective stop bar is attached with both free ends at the stationary tube (4) and the other one at the catch tube (6), so that they protrude in starting position out of the main plane of the stanchion to a side where a feed trough is arranged, and/or
- wherein the stop bars (35) are pivotable in outward direction with respect to the neck channel (28), thus to a bigger distance from one another and the pivot links supporting at the stationary tube (4) or the catch tube (6) are preloaded into the starting position.

## Revendications

1. Cornadis (1) avec par emplacement
- deux barrières s'étendant de bas en haut et un canal de cou (28) entre ces dernières, dont la largeur est modifiable par modification de l'écartement des barrières de délimitation, et
- des moyens pour la modification de la distance entre les barrières,
- une barrière de délimitation supérieure et inférieure horizontale de support qui limite la longueur ainsi que la hauteur du canal de cou (28),
en position fermée,
- les deux barrières s'étendant parallèlement entre elles et
- le canal de cou (28) présentant, vu verticalement par rapport au plan principal du cornadis (1), une courbe oblique au moins par section par rapport à la verticale,
**caractérisé en ce que**
- le canal de cou (28) observé perpendiculairement au plan principal du cornadis (1) présente une forme incurvée dans sa direction d'extension,
- l'uncurvation du canal de cou (28) étant si forte que le passage droit libre est plus étroit du bas vers le haut que la largeur du cou de l'animal enfermé.

2. Cornadis selon la revendication 1, **caractérisé en ce que**
- le canal de cou (28) présentent deux courbures et en particulier
- le canal de coup (28) présente une forme de chapeau.

3. Cornadis selon l'une des revendications précédentes, **caractérisé en ce que**
- le décalage latéral maximal du canal de cou (28) s'élève dans son extension à au moins 10 %, mieux 20 %, mieux 25 % de la largeur du canal de coup (28), et/ou
- le décalage latéral maximal du canal de cou (28) s'élève dans son extension à au moins 10 cm, au mieux 20 cm, au mieux au moins à 25 cm.

4. Cornadis selon l'une des revendications précédentes, **caractérisé en ce que** l'extrémité supérieure et inférieure du canal de coup (28) sont alignées l'une au-dessus de l'autre.

5. Cornadis selon l'une des revendications précédentes, **caractérisé en ce que** la barrière de délimitation mobile, en particulier le tube de délimitation est une barrière d'emprisonnement, en particulier un tube d'emprisonnement (6) d'un cornadis (1) qui est logé pivotant sur une barrière de base également mobile, en particulier sur un tube de base (5) dans le plan principal du canal de cou (28) et ainsi du cornadis et en particulier la barrière de base en particulier le tube de base (5) est coulissant sur son extrémité supérieure par une tige de commande (7) entre une position d'ouverture et une position de fermeture.

6. Cornadis selon l'une des revendications précédentes, **caractérisé en ce que**
- la barrière de délimitation fixe, en particulier le tube de délimitation, est vissé en bas et en haut à la barrière de support horizontale, en particulier le tube de support (3, 3'), et/ou
- le cornadis est perpendiculaire observé dans sa direction d'extension, et/ou
- le canal de cou (28) possède une longueur, à savoir une hauteur qui est au moins le double de la hauteur du cou de l'animal à enfermer.

7. Cornadis selon l'une des revendications précédentes, **caractérisée en ce que**
- sur la barrière d'emprisonnement, en particulier sur le tube d>'emprisonnement (6), il est disposé un poids supplémentaire, en particulier dans la zone de son coude, en particulier à l'intérieur du tube d'emprisonnement (6), en particulier sous forme d'une barre métallique massive à l'intérieur du tube d'emprisonnement (6) dans la zone de sa courbure, lequel est courbé avec la courbure du tube d'emprisonnement (6), et/ou
- sur l'extrémité inférieure de la barrière d'emprisonnement, en particulier du tube d'emprisonnement (6), il est disposé une fourche en forme de U (18"), dont les branches libres sont si longues qu'elles agrippent dans chaque position de fonction par la barrière inférieure de support, en particulier le tube de support (3').

8. Cornadis selon l'une des revendications précédentes, **caractérisé en ce que**
- sur les extrémités libres de la fourche en U (18) de l'extrémité supérieure de la barrière d'emprisonnement, en particulier du tube d'emprisonnement (6) entre lesquelles passe la tige de commande (7), il est placé un pont (12) qui empêche l'enfilement des extrémités libres de la fourche dans par exemple un anneau nasal et en particulier
- le pont (12) est placé et fixé par en haut sur les extrémités libres de la fourche (18).

9. Cornadis selon l'une des revendications précédentes, **caractérisée en ce que**
- l'articulation pivotante (13) se trouve sur l'extrémité inférieure de la barrière de base, en particulier du tube de base (5), dans la zone de section transversale du tube de base (5), et en particulier dans un perçage à travers le tube de base (5),
- l'articulation pivotante (10) comprend entre le tube de base (5) et le tube d'emprisonnement (6) un support de palier (15) en forme de U qui est soudé par sa branche de liaison à la face du tube d'emprisonnement (6) opposée au tube de base (5) et recouvre avec ses extrémités libres de part et d'autres le tube de base (5), où un boulon de palier (16) s'étend à travers le support de palier et le tube de base (5).

10. Cornadis (1) selon l'une des revendications précédentes, **caractérisé en ce qu'**
- au point de connexion entre l'extrémité supérieure du tube de base (5) respectivement du tube d'emprisonnement (6) et de la tige de commande (7) respectivement de la barrière supérieure de support, en particulier du tube support (3), il est prévu un emprisonnement individuel (17) qui permet de maintenir chacun des tubes d'emprisonnement (6) d'une grille complète en position d'emprisonnement, tandis que le reste est déplacé par la tige de commande (7) en position d'ouverture et/ou
- il est fixé sur le tube fixe (4) un étrier de blocage (20) en particulier soudé qui fait saillie en décalé parallèlement par rapport au plan du tube de base (5) et du tube d'emprisonnement (6) en direction du tube d'emprisonnement (6) et diminue dans toutes les fonctions du tube de base (5) l'espace libre restant entre le tube de base (5) et le tube fixe (4) de sorte que le passage d'une tête peut être empêché de manière fiable et autant les espaces libre dans l'étrier de blocage (20) qu'entre l'étrier de blocage (20) et le tube de base (5) possèdent une base qui ne prend pas une forme conique du haut vers le bas mais reste constante ou plus large.

11. Cornadis selon l'une des revendications précédentes, **caractérisé en ce que**
- l'étrier de blocage (20) est essentiellement en forme de U dont les branches libres parallèles (20a, b) sont soudées sur le tube fixe (4) et s'étendent horizontalement, tandis que la branche (20c) verticale à relier présente un coude double avec deux zones d'extrémité décalées parallèlement entre elles et une zone médiane oblique qui correspond dans son inclinaison à peu près à l'inclinaison de la zone médiane du tube de base (5) entre la position ouverte et la position d'emprisonnement de blocage et/ou
- une barrière supplémentaire (20d) s'étend depuis la zone d'extrémité supérieure de cette branche transversale verticale (20c) vers le bas en direction de la branche horizontale inférieure de l'étrier de blocage et est ainsi soudée aux deux extrémités.

12. Cornadis selon l'une des revendications précédentes, **caractérisé en ce que**
- sur le tube d'emprisonnement (6) faisant saillie en direction du tube de base (5), une tôle de fermeture (21) est soudée en particulier avec l'extrémité inférieure en commençant sur l'articulation (10), en particulier sur la face détournée de l'auge, tôle qui agrippe par l'arrière dans chaque position de fonction le tube de base (5) et ainsi ferme en direction transversalement au plan principal de la grille l'espace libre entre le tube de base (5) et le tube d'emprisonnement (6) au moins dans la zone au-dessus de l'articulation (10), et en particulier
- la tôle de fermeture (21) possède sa plus grande largeur dans la zone du coude du tube d'emprisonnement (6).

13. Cornadis selon l'une des revendications précédentes, **caractérisé en ce que**
- sur la pièce tubulaire (14) qui est enfilée sur le tube de support inférieur (3') et sert de support de palier pour l'articulation inférieure (13) du tube de base (5), il est prévu une fixation en particulier une tubulure (24) dressée vers le haut pour un étrier de séparation (26) entre chaque boxe de l'étable qui est ancré par l'autre extrémité dans le sol de l'étable et en particulier,
la pièce tubulaire (14) est raccourcie de sorte qu'observé dans sa direction longitudinale, elle présente à distance deux perçages filetés séparés pour l'insertion de vis de serrage (27) contre le tube support (3').

14. Cornadis selon l'une des revendications précédentes, **caractérisée en ce que**
- sur le cornadis (1), il est disposé un blocage d'ouverture brutale sous forme d'au moins une pièce de butée (34, 35) qui est fixé mobile sur le cornadis (1) et qui se trouve en position de sortie soit à l'intérieur de la zone supérieure du canal de cou (28) soit fait saillie juste à côté du canal de cou (28) du plan principal du cornadis (1) en direction de l'auge et en particulier
- la partie de butée est une partie de butée fixée sur le tube fixe (4) ou le tube supérieur de support (3) qui s'engage à l'état initial dans le canal de cou (28) entre le tube fixe vertical (4) et le tube d'emprisonnement (6) ou
- la partie de butée est une bague de butée (34) qui recouvre sensiblement en particulier au moins le tiers supérieur du canal de cou, au mieux la moitié supérieure du canal de cou (28).

15. Cornadis selon l'une des revendications précédentes, **caractérisée en ce que**
- la partie de butée est constituée par deux étriers de butée (35) dont l'un est fixé à ses deux extrémités libres sur le tube fixe (4) et l'autre est fixé sur le tube d'emprisonnement (6), de sorte qu'elle fait saillie en position initiale du plan principal du cornadis en direction de la face sur laquelle se trouve l'auge et/ou
- les étriers de butée (35) sont pivotants par rapport au canal de cou (28) vers l'extérieur, donc à plus grande distance les uns des autres et les articulations maintenues sur le tube fixe (4) respectivement sur le tube d'emprisonnement (6) sont précontraintes dans la position initiale.
